# EUROPÄISCHE PATENTSCHRIFT

(11) **EP 1 734 270 B1**
(45) Veröffentlichungstag und Bekanntmachung des Hinweises auf die Patenterteilung: **29.08.2007**
(21) Anmeldenummer: 05012611.9
(22) Anmeldetag: 13.06.2005
(51) Int. Cl.: F16C 33/76

(54) **Wälzlager mit einer geschützten Dichtungsanordnung**
Roller bearing with a protected sealing assembly
Palier à roulement avec un dispositif d'étanchéité protégé

(43) Veröffentlichungstag der Anmeldung: 20.12.2006
(73) Patentinhaber: ZF FRIEDRICHSHAFEN AG, 88046 Friedrichshafen (DE)
(72) Erfinder: Otto, Thomas, Dr., 97072 Würzburg (DE); Nagler, Franz, 97503 Gädheim-Ottendorf (DE)

(56) Entgegenhaltungen:
- EP-A- 0 248 572
- DE-A1- 10 220 419
- US-A- 3 770 993
- US-A- 4 951 884
- US-A1- 2004 005 102

## Beschreibung

Die Erfindung betrifft ein Wälzlager gemäß dem Oberbegriff des Patentanpruchs.

Wälzlager bilden als Ausrücklager eine Hauptkomponente von mechanisch, hydraulisch oder elektrisch betätigten trockenen Reibungskupplungen in Kraftfahrzeugen. Die Einsatzbedingungen eines derartigen Ausrücklagers im Antriebsstrang von Kraftfahrzeugen erfordern zur Erzielung einer möglichst langen Lagerlebensdauer eine sorgfältige Abdichtung des Lagerinnenraumes, in dem die Wälzkörper mit den Laufbahnen des Lagers im kraftübertragenden Wälzkontakt stehen. Dafür sind unmittelbar am Wälzlager bzw. an zu einem Lager benachbarten Bauteilen sowohl berührende als auch unberührende Dichtungsanordnungen in Form von Elastomer- und Labyrinthdichtungen vorgesehen, womit ein Schmierstoffaustritt aus einem Lager und ein Schmutzeintritt in ein Lager auf ein Minimum reduziert werden sollen.

Ein gattungsgemäßes Wälzlager für einen Ausrücker zum Betätigen einer Kraftfahrzeugreibungskupplung wird beispielsweise in der EP 1 286 074 B1 offenbart. Dieses umfasst zunächst einen ersten und einen zweiten Lagerring, sowie ein weiteres als Radialflansch einer Führungsmuffe ausgebildetes Bauelement, an dessen Stirnseite die beiden Lagerringe angeordnet sind. An den Lagerringen sind einander zugewandte Laufbahnen für umlaufende Wälzkörper ausgebildet, wobei das Wälzlager durch axial beidseitig angeordnete Dichtungen gegen das Eindringen von Schmutz abgedichtet ist. Dazu ist kupplungsseitig eine Berührungsdichtung mit einem zusätzlichen äußeren Labyrinthdichtungsabschnitt und auf der gegenüberliegenden Seite eine als Metallscheibe ausgeführte weitere Labyrinthdichtung vorgesehen.

Als besonders anspruchsvoll erweisen sich Wälzlagerdichtungen in Kraftfahrzeugen, welche außerordentlich großen Staub- und Schmutzmengen ausgesetzt sind, wie dieses beispielsweise im Bergbau der Fall ist. Die Fremdpartikel, die z.B. in der Umgebungsluft enthaltene Schwebstoffe darstellen, gelangen leicht in die Getriebeglocke, werden dort mit der zirkulierenden Luft unmittelbar an das Kupplungsausrücksystem transportiert und lagern sich gemeinsam mit dem ohnehin vorhandenen Kupplungsabrieb bevorzugt an beiden Dichtelementen eines vorstehend beschriebenen Ausrücklagers ab. Über die prinzipbedingt schwellende Axialbelastung eines Ausrücklagers und durch die verschleißfördernde Aggressivität der Schwebstoffe bzw. Stäube kommt es allmählich zu einer Minderung der Wirksamkeit und schließlich zu einem frühen Versagen der Dichtsysteme, was letztendlich zum Ausfall des Ausrücklagers und damit der gesamten Reibungskupplung führen kann.

Von diesem Problem ausgehend, stellt sich die Erfindung die Aufgabe, ein Wälzlager der eingangs erläuterten Art bereitzustellen, dessen Dichtelemente auch unter extremen äußeren Bedingungen einen im Vergleich zum Stand der Technik länger anhaltenden Schutz des Wälzlagers ermöglichen.

Die Erfindung löst das gestellte Problem mit einem gattungsgemäßen Wälzlager, welches zusätzlich die im Kennzeichen des Patentanspruchs aufgeführten Merkmale aufweist.

Der Erfindung liegt zunächst der Gedanke zugrunde, dass die Wirksamkeit bzw. Lebensdauer eines Wälzlagers, insbesondere der Dichtungsanordnung im erheblichen Maße von der in einer bestimmten Zeit auf dieses einwirkenden Menge an Schmutz- bzw. Staubpartikeln mitbestimmt wird. Bei einem Kupplungsbetätigungssystem wird die durch Kupplungsabrieb erzeugte und die in der Umgebung eines Kupplungsausrücklagers zirkulierende Menge an Fremdpartikeln durch die Betriebsbedingungen bestimmt und kann deshalb nur unwesentlich beeinflusst werden. Die Erfindung basiert daher auf der Idee, die Schmutzpartikelmenge lokal, und zwar im Bereich der gefährdeten Wälzlagerdichtungsanordnung, zu reduzieren. Es wird zur Lösung des Problems vorgeschlagen, einen Zugangsbereich der Dichtungsanordnung, der zwischen der Stirnseite des weiteren Elements und der dieser zugewandten Innenseite des radial inneren Lagerringes ausgebildet ist, mit einem Sperrmedium zu füllen, welches einen Festschmierstoff mit einer pastösen Konsistenz ohne Tropfpunkt darstellt.

Auf diese Weise können in der Umgebung des Wälzlagers auftretende Fremdpartikel nicht zu der Dichtungsanordnung vordringen und werden sicher von dieser ferngehalten. Der mit dem Sperrmedium befüllte Zugangsbereich dient somit als eine zu der Dichtungsanordnung vorgelagerte Dichtung. In Folge wird die Fremdpartikelbelastung an der Dichtungsanordnung und damit der dort auftretende Verschleiß reduziert, wodurch die Lebensdauer eines Wälzlagers beachtlich gesteigert werden kann. Ein Festschmierstoff weist ein besonders hohes Haftungsvermögen an den vorzugsweise metallischen Teilen des Wälzlagers und der dazu benachbarten Bauteile, z.B. einem Lagerträger, auf. Dadurch, dass der Festschmierstoff eine pastöse Konsistenz aufweist, ist eine gewisse Elastizität vorhanden, welche bei Relativbewegungen der den Zugangsbereich bildenden Elemente eine Form- und/oder eine Volumenänderung verschleißfrei ausgleichen kann, ohne dass der Kontakt des Festschmierstoffes zu dem Wandungsbereich des Reservoirs aufgehoben wird. Weiterhin weist der Festschmierstoff keinen Tropfpunkt auf, so dass bei der üblicherweise in einem Wälzlager entstehenden Betriebswärme ein Herausfließen und damit eine allmähliche Entleerung des Reservoirs im Wesentlichen vermieden werden kann.

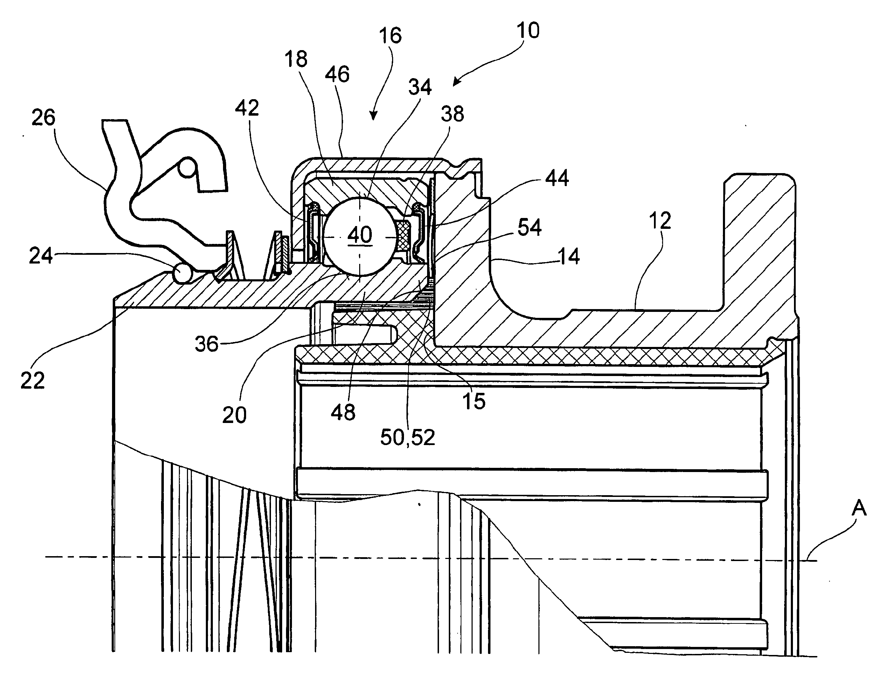

Die Erfindung wird nachfolgend anhand der beiliegenden Zeichnung beispielhaft erläutert.

Die einzige Figur zeigt einen in gezogener Bauweise ausgeführten Ausrücker 10 zum Betätigen einer nicht dargestellten Kraftfahrzeugreibungskupplung. Dieser umfasst zunächst als Trägerelement 12 eine Schiebehülse 12 mit einem daran angeordneten Radialflansch 14 und ein an diesem befestigtes Ausrücklager 16, welches als Schrägkugellager ausgebildet ist. Das Kugellager 16 weist einen bezüglich der Schiebehülse 12 feststehenden ersten, radial äußeren Lagerring 18 und einen umlaufenden zweiten, radial inneren Lagerring 20 auf, welcher mittels eines Axialfortsatzes 22 über das Lager 16 hinaus verlängert ist und mittels eines Lastringes 24 und eines Ausrückringes 26 mit zeichnerisch nicht dargestellten Zungenenden einer Membranfeder in Wirkverbindung steht, welche das Ausrückorgan der zu betätigenden Reibungskupplung darstellt.

Die Lagerringe 18, 20 weisen zueinander zugewandte Laufbahnen 34, 36 für eine Mehrzahl in einem Kugelkäfig 38 geführte Kugeln 40 auf. Zum Schutz vor dem Eindringen von Schmutz und gleichfalls vor dem Austreten von einem im Lagerinneren befindlichen Schmiermittel sind stirnseitig zwischen den Lagerringen 18, 20 in bekannter Art zwei Berührungsdichtungen 42, 44 ausgeführt. Der Radialflansch 14 trägt ein an diesem verrolltes Halteblech 46, welches den radial äußeren, feststehenden Lagerring 18 und die Dichtungen 42, 44 umgreift und somit das Wälzlager 16 axial an der Schiebehülse 12 festhält.

Um Staubablagerungen und allgemein einen Zutritt von Schmutz in das Wälzlager 16, insbesondere im Bereich der zu dem Radialflansch 14 benachbarten Berührungsdichtung 44 zu unterbinden, ist an der Innseite des inneren Lagerringes 20 eine Schräge 48 ausgeführt, wodurch sich gemeinsam mit der Stirnseite 15 des Radialflansches 14 ein nach radial innen erweiternder nutförmiger Ringraum 50 ergibt, der ein Reservoir für einen Festschmierstoffvorrat 52 bildet. Beispielsweise eignet sich dazu der eine pastöse Konsistenz aufweisende Festschmierstoff mit der Bezeichnung TURMOSYNTH 2000 der Lubricant Consult GmbH. Selbst bei einer radialen Justage des Wälzlagers 16 am Radialflansch 14 zum Ausgleich eines Versatzes der Kupplungsachse gegenüber der Ausrückerachse A bleibt durch dessen Hafteigenschaften begünstigt die Form und das Volumen des Festschmierstoffvorrates 52 im Wesentlichen erhalten. Der zu einer Selbstzentrierung erforderliche Spielraum wird durch den Festschmierstoffvorrat 52 nicht beeinflusst.

Alternativ oder zusätzlich zu dem dargestellten Ausführungsbeispiel kann der Festschmierstoffvorrat 52 auch ohne weitere Vorkehrungen in einem bereits an einem Wälzlager und einem benachbarten Bauteil ausgebildeten Raum deponiert werden, bspw. im Spalt 54 zwischen dem Lagerinnenring 20 und dem Radialflansch 14.

### Bezugszeichenliste

- 10: Ausrücker
- 12: Schiebehülse
- 14: Radialflansch
- 15: Stirnseite
- 16: Wälzlager, Ausrücklager
- 18, 20: Lagerring
- 22: Axialfortsatz
- 24: Lastring
- 26: Ausrückring
- 34,36: Laufbahn
- 38: Kugelkäfig
- 40: Kugeln
- 42, 44: Berührungsdichtung
- 46: Halteblech
- 48: Schräge
- 50: Ringraum
- 52: Festschmierstoffvorrat
- 54: Spalt

## Patentansprüche

1. Wälzlager (16) für einen Ausrücker (10) zum Betätigen einer Kraftfahrzeugreibungskupplung, umfassend
- einen ersten Lagerring (18), einen zweiten Lagerring (20) und ein weiteres Bauelement (12), an dessen Stirnseite (15) die Lagerringe (18, 20) angeordnet sind,
- an den Lagerringen (18, 20) ausgebildete und einander zugewandte Laufbahnen (34, 36),
- zwischen den Lagerringen (18, 20) auf den Laufbahnen (34, 36) umlaufende Wälzkörper (40) sowie
- eine Dichtungsanordnung (42, 44) zur Abdichtung des Wälzlagers (16),
**dadurch gekennzeichnet,**
**dass** ein Zugangsbereich (50, 54) der Dichtungsanordnung (42, 44), der zwischen der Stirnseite (15) und der dieser zugewandten Innenseite des radial inneren Lagerringes (20) ausgebildet ist, mit einem Sperrmedium (52) gefüllt ist, welches einen Festschmierstoff mit einer pastösen Konsistenz und ohne Tropfpunkt darstellt.

## Claims

1. Roller bearing (16) for a clutch operator (10) for the actuation of a motor vehicle friction clutch, comprising
- a first bearing ring (18), a second bearing ring (20) and a further component (12), on the front face (15) of which the bearing rings (18, 20) are arranged,
- opposing raceways (34, 36) formed on the bearing rings (18, 20),
- rolling elements (40) rotating on the raceways (34, 36) between the bearing rings (18, 20) and
- a sealing arrangement (42, 44) for sealing off the roller bearing (16),
**characterized in that**
an admission area (50, 54) of the sealing arrangement (42, 44), which is formed between the front face (15) and the inside of the radially inner bearing ring (20) facing the former, is filled with a confining medium (52), which constitutes a solid lubricant having a pasty consistency without any drop point.

## Revendications

1. Palier à roulement (16) pour un dispositif de débrayage (10) destiné à actionner un embrayage à friction de véhicule automobile, comprenant
- une première bague de roulement (18), une deuxième bague de roulement (20) et un élément supplémentaire (12) sur le côté frontal (15) duquel sont disposées les bagues de roulement (18, 20),
- des pistes de roulement (34, 36) formées sur les bagues de roulement (18, 20) et tournées l'une vers l'autre,
- des éléments roulants (40) circulant entre les bagues de roulement (18, 20) sur les pistes de roulement (34, 36), et
- un ensemble de joint d'étanchéité (42, 44) pour l'étanchement du palier à roulement (16),
**caractérisé en ce qu'**une région d'accès (50, 54) de l'ensemble de joint d'étanchéité (42, 44), qui est formée entre le côté frontal (15) et le côté intérieur de la bague de roulement radialement intérieure (20) qui est tourné vers ce côté frontal (15), est remplie d'un agent d'isolement (52) qui consiste en un lubrifiant solide de consistance pâteuse et sans point de goutte.
